# EUROPÄISCHE PATENTSCHRIFT

(11) **EP 2 235 220 B1**
(45) Veröffentlichungstag und Bekanntmachung des Hinweises auf die Patenterteilung: **07.03.2018**
(21) Anmeldenummer: 09705361.5
(22) Anmeldetag: 12.01.2009
(51) Int. Cl.: C21C 5/52, F27B 3/28, F27D 19/00, F27D 21/04

(54) **VERFAHREN ZUR ERMITTLUNG EINES STÜCKIGKEITSMASSES FÜR FESTSTOFF IN EINEM LICHTBOGENOFEN, EINEN LICHTBOGENOFEN, EINE SIGNALVERARBEITUNGSEINRICHTUNG SOWIE PROGRAMMCODE UND EIN SPEICHERMEDIUM**
METHOD FOR DETERMINING THE SIZE AND SHAPE OF A SOLID MATERIAL IN AN ARC FURNACE, AN ARC FURNACE, A SIGNAL PROCESSING DEVICE AND PROGRAMME CODE AND A STORAGE MEDIUM
PROCÉDÉ DE DÉTERMINATION D'UNE GRANDEUR INDIQUANT LA PRÉSENCE DE MORCEAUX DE DIFFÉRENTES TAILLES POUR MATIÈRE SOLIDE CONTENUE DANS UN FOUR À ARC ÉLECTRIQUE, FOUR À ARC ÉLECTRIQUE, DISPOSITIF DE TRAITEMENT DE SIGNAL, CODE PROGRAMME ET SUPPORT D'ENREGISTREMENT

(30) Priorität: 31.01.2008 DE 102008006966
(43) Veröffentlichungstag der Anmeldung: 06.10.2010
(73) Patentinhaber: Primetals Technologies Germany GmbH, 91052 Erlangen (DE)
(72) Erfinder: DÖBBELER, Arno, 91074 Herzogenaurach (DE); KRÜGER, Klaus, 22179 Hamburg (DE); MATSCHULLAT, Thomas, 90542 Eckental (DE); RIEGER, Detlef, 85598 Baldham (DE)
(74) Vertreter: Metals@Linz
(86) Internationale Anmeldenummer: PCT/EP2009/050243
(87) Internationale Veröffentlichungsnummer: WO 2009/095293

(56) Entgegenhaltungen:
- EP-A- 0 403 413
- DE-C1- 4 425 089
- DE-U1- 29 713 666
- FR-A- 2 670 571
- SU-A1- 935 534

## Beschreibung

Die Erfindung betrifft ein Verfahren zur Ermittlung eines Stückigkeitsmaßes für Feststoff in einem Lichtbogenofen. Ferner betrifft die Erfindung einen Lichtbogenofen mit einer Signalverarbeitungseinrichtung, eine Signalverarbeitungseinrichtung, ein Speichermedium und Programmcode zur Durchführung des Verfahrens.
Ein Lichtbogenofen dient der Herstellung von Flüssigmetall, in der Regel Stahl. Das Flüssigmetall wird aus Schrott oder reduziertem Eisen zusammen mit weiteren Zuschlagsstoffen hergestellt. Gegenwärtig wird ein Lichtbogenofen nahezu unabhängig vom aufzuschmelzenden Feststoff des Lichtbogenofens betrieben. Der Betrieb des Lichtbogenofens, insbesondere die Einstellung eines Lichtbogens, erfolgt daher statisch, das heißt anhand eines festen Prozessplans, in Bezug auf das dem Lichtbogenofen zugeführte Schmelzgut. Dies führt dazu, dass der Lichtbogenofen unter technischen und wirtschaftlichen Gesichtspunkten nicht optimal betrieben wird. Beispielsweise werden Chargierzeitpunkte oder Abstichzeitpunkte nicht optimal gewählt, da entweder zu lang mit dem Chargieren von neuem Feststoff gewartet wird oder bereits chargiert wird, obwohl noch nicht ausreichend viel Feststoff im Lichtbogenofen aufgeschmolzen ist.
Aus der Offenlegungsschrift DE 10 2005 034 378 A1 ist ein Verfahren zur Bestimmung einer Beschaffenheit des Inhalts eines Lichtbogenofens bekannt. Jedoch bleibt es unklar, wie ein derartiges Verfahren gemäß der Offenlegungsschrift funktionieren soll. Auch FR2670571A beschreibt ein solches Verfahren. Aufgabe der vorliegenden Erfindung ist es, ein Verfahren der eingangs genannten Art bereitzustellen, mit welchem eine Eigenschaft eines dem Lichtbogenofen zugeführten Schmelzguts bestimmt werden kann. Weiterhin ist es Aufgabe der Erfindung, einen Lichtbogenofen, eine Signalverarbeitungseinrichtung, einen Programmcode und ein Speichermedium zur Durchführung eines solchen Verfahrens anzugeben.

Die Aufgabe wird gelöst durch ein Verfahren zur Ermittlung eines Stückigkeitsmaßes für Feststoff, insbesondere Schrott, in einem Lichtbogenofen, wobei eine Elektrode einen Elektrodenstrom zur Ausbildung eines Lichtbogens zwischen der Elektrode und dem Feststoff zugeführt wird, wobei deren zugeführter Elektrodenstrom erfasst wird, wobei aus dem erfassten Elektrodenstrom ein Effektivwertmaß des Elektrodenstroms ermittelt wird, wobei aus dem erfassten Elektrodenstrom ein einem Frequenzbereich des erfassten Elektrodenstroms zugeordneter Stromanteil ermittelt wird, wobei als Stückigkeitsmaß ein Quotient aus Stromanteil und Effektivwertmaß gebildet wird. Als Quotient aus Stromanteil und Effektivwertmaß wird sowohl der Quotient gebildet aus Stromanteil durch Effektivwertmaß als auch der Quotient gebildet aus Effektivwertmaß durch Stromanteil verstanden.

Unter Maß für die Stückigkeit eines Feststoffs wird jede konkrete Größe verstanden, welche geeignet ist, Unterschiede in der Stückigkeit von unterschiedlich stückigem Feststoff aufzuzeigen. Unter Stückigkeit des Feststoffs kann jede physikalische Größe des Feststoffs verstanden werden, welche das Brennverhalten des Lichtbogens auf dem Feststoff beeinflusst. Insbesondere kann darunter die Größe eines zusammenhängenden Feststoffsteils und/oder dessen Kompaktheit verstanden werden, wobei Kompaktheit im Sinne eines Maßes für eine vorliegende Feststoffdichteverteilung zu verstehen ist.

Unter Effektivwertmaß wird ein Maß verstanden, welches mittelbar oder unmittelbar vom Effektivwert des Elektrodenstroms im elektrotechnischen Sinne abhängt. Dies kann bspw. der Effektivwert des Elektrodenstroms selbst sein, oder etwa die aus dem Effektivwert des Elektrodenstroms berechnete Leistung, Energie oder ein anderes mit dem Effektivwert des Elektrodenstroms in Beziehung stehendes Maß, beispielsweise das Quadrat des Elektrodenstroms.

Zur Durchführung des Verfahrens umfasst der Lichtbogenofen mindestens eine Elektrode. In diesem Sinne ist auch der Anspruchswortlaut auszulegen. Wird im Rahmen dieser Anmeldung von "einer Elektrode" gesprochen, so ist hier die Wortbedeutung des unbestimmten Artikels "einer" heranzuziehen. Es handelt sich hierbei nicht um eine Zahlenangabe.

Grundlage der Erfindung ist es, dass die Erfinder erkannt haben, dass das sich im Elektrodenstrom niederschlagende Brennverhalten des Lichtbogens Rückschlüsse auf die Beschaffenheit von vom Lichtbogen getroffenem Schmelzgut zulässt. Der Bereich, in dem der Lichtbogen auf das Schmelzgut trifft, wird in der Regel als Lichtbogenfußbereich oder Lichtbogenfußpunkt bezeichnet. Es wurde ein Verfahren geschaffen, mit welchem nun auf die Beschaffenheit des Schmelzguts, insbesondere in einem Lichtbogenfußbereich des Lichtbogens, anhand eines erfassten Elektrodenstroms zurückgeschlossen werden kann. Erst dies erlaubt eine dynamische Regelung des Lichtbogenofens im Hinblick auf den im Lichtbogenofen vorliegenden Feststoff. Durch die Erfindung ist es möglich, eine Erhöhung der Wirtschaftlichkeit eines Elektrolichtbogenofens bereitzustellen, da mit dem erfindungsgemäßen Verfahren ein Energieeintrag in den Lichtbogenofen abhängig von der Beschaffenheit des im Lichtbogen aufzuschmelzenden Feststoffs erfolgen kann.

In einer vorteilhaften Ausgestaltung der Erfindung wird der dem Frequenzbereich des erfassten Elektrodenstroms zugeordnete Stromanteil mittels Fouriertransformation des Elektrodenstroms ermittelt. Die Fouriertransformation ist ein einfaches Instrument, um ein Signal von einem Zeitraum in einen Frequenzraum zu überführen. Insbesondere existiert eine Vielzahl von Variationen, wie eine derartige Überführung von Signalen im Zeitraum mittels Fouriertransformation erfolgen kann. Es kann hierbei gearbeitet werden mit diskreter Fouriertransformation, einer Fourierreihe, kontinuierlicher Fouriertransformation, mit der Fast Fouriertransformation und ggf. weiteren Variationen der Fourierstransformation. Die Fouriertransformation ist eine einfache und gängige Möglichkeit, diesen Verfahrensschritt der Überführung des Elektrodenstromsignals vom Zeitraum in den Frequenzraum schnell und effizient umzusetzen.

In einer weiteren vorteilhaften Ausgestaltung der Erfindung wird die Elektrode mit einer Betriebsfrequenz betrieben und der Frequenzbereich ist im Wesentlichen auf die Betriebsfrequenz der Elektrode beschränkt. Eine derartige Ausgestaltung kann insbesondere bei einem Drehstrom-Elektrolichtbogenofen verwendet werden. Ein Großteil der heutzutage installierten Elektrolichtbogenofenkapazität sind Drehstrom-Elektrolichtbogenöfen. Hierbei wird in der Regel an drei Elektroden eine periodische Spannung angelegt, wobei der Lichtbogen jeweils an den Spannungsmaxima zündet und dazwischen fast zum Erlöschen kommt. Das Pulsieren des Lichtbogens erfolgt in der Regel mit der doppelten Frequenz der Betriebsfrequenz der Elektrode. Die Betriebsfrequenz ist diejenige Frequenz einer elektrischen Größe, mit welcher die Elektrode beaufschlagt wird, in der Regel um den Lichtbogen zu betreiben. Durch die Beschränkung des auszuwertenden Frequenzbereichs im Wesentlichen auf die Betriebsfrequenz der Elektrode, wird somit der Stromanteil der Grundschwingung ermittelt. Dies ist besonders einfach möglich.

In einer weiteren vorteilhaften Ausgestaltung der Erfindung wird die Elektrode mit einer Betriebsfrequenz betrieben, und der Frequenzbereich umfasst im Wesentlichen genau nicht die Betriebsfrequenz der Elektrode. In diesem Fall werden die Stromanteile der Oberschwingungen ermittelt. Die im vorherigen Absatz gemachten Äußerungen zur Betriebsfrequenz der Elektrode gelten analog bei der Bestimmung des Stromanteils der Oberschwingungen zur Betriebsfrequenz der Elektrode.

Der Stromanteil der Grundschwingung bzw. ein zum Grundschwingungstromanteil komplementärer Stromanteil ist besonders gut für die Ermittlung des Stückigkeitsmaßes geeignet. Der Grundschwingungsstromanteil und der Oberschwingungsstromanteil sind nicht unabhängig voneinander, sondern ergänzen sich zum gesamten Elektrodenstrom, und können daher als komplementär bezeichnet werden. Daher kann der Oberschwingungsstromanteil einfach mit Hilfe des Grundschwingungsstromanteils und des erfassten Elektrodenstroms sowie der Grundschwingungsstromanteil mit Hilfe des Oberschwingungsstromanteils und dem erfassten Elektrodenstrom berechnet werden. Dabei kann der Fachmann vorsehen, dass bei Berechnung des Oberschwingungsstromanteils nur Stromanteile berücksichtigt werden, welche einen bestimmten, festlegbaren Schwellwert überschreiten.

Wird der Stromanteil der Grundschwingung in Bezug gesetzt zum Effektivwertmaß bzw. wird der Stromanteil der Oberschwingungen in Bezug gesetzt zum Effektivwertmaß, so erhält man eine besonders vorteilhafte Größe, welche Aufschluss darüber gibt, wie die Stückigkeit des Feststoffs im Lichtbogenofen, insbesondere am Lichtbogenfußbereich, beschaffen ist. Denn die Stückigkeit des Feststoffs wirkt sich auf das Brennverhalten des Lichtbogens aus. Das Lichtbogenbrennverhalten ist implizit im gemessenen Elektrodenstrom enthalten. Durch Auswertung des Elektrodenstroms kann somit ein relatives Maß für die Stückigkeit von Feststoff im Lichtbogenfußbereich erhalten werden.

In einer besonders vorteilhaften Ausführungsform der Erfindung wird das Stückigkeitsmaß zur Steuerung und/oder Regelung wenigstens einer Prozessgröße des Lichtbogenofens verwendet. So kann beispielsweise anhand des ermittelten Stückigkeitsmaßes die über eine Mehrzahl von Elektroden in das Schmelzgut einzubringende Energie entsprechend des ermittelten Stückigkeitsmaßes für jede Elektrode getrennt gesteuert bzw. geregelt werden. Wird beispielsweise unterhalb einer der Elektroden ein Stückigkeitsmaß ermittelt, welches mit Schwerschrott oder einem "Bären" in Verbindung zu bringen ist, so kann die Lichtbogenleistung für diese Elektrode, beispielsweise auf Kosten der anderen beiden Elektroden, erhöht werden. Unter Prozessgröße wird jede einstellbare physikalische Größe verstanden, welche den Prozess des Schmelzens von Feststoff, vorzugsweise wesentlich, beeinflusst. Vorteilhaft ist es insbesondere, ein Verfahren zum Betreiben eines Lichtbogenofens mit wenigstens einer Elektrode vorzusehen, wobei ein dem Lichtbogenofen zugeführter Feststoff mittels eines von der wenigstens einen Elektrode ausgebildeten Lichtbogens geschmolzen wird, wobei ein Maß für die Stückigkeit des Feststoffs ermittelt wird, und anhand des ermittelten Stückigkeitsmaßes eine Prozessgröße des Lichtbogenofens gesteuert und/oder geregelt wird.

Vorteilhaft kann das Verfahren zur Ermittlung eines Stückigkeitsmaßes in einem Lichtbogenfußbereich in einem Lichtbogenofen mit weiteren Verfahren zur Bestimmung von Zustandsgrößen in einem Lichtbogenofen kombiniert werden. Dadurch ist es möglich, den Betrieb eines Lichtbogenofens möglichst vollumfänglich, dynamisch auf jeweils im Lichtbogenofen vorliegende Zustandsgrößen beim Stahlherstellungsprozess anzupassen.

Die Aufgabe wird ebenfalls gelöst durch eine Signalverarbeitungseinrichtung für einen Lichtbogenofen, mit einem maschinenlesbaren Programmcode, welcher Steuerbefehle aufweist, die die Signalverarbeitungseinrichtung zur Durchführung eines Verfahrens nach einem der Ansprüche 1 bis 5 veranlasst. Dadurch kann die Ermittlung des Stückigkeitsmaßes für Feststoff automatisiert durchgeführt werden, und es kann anhand des Stückigkeitsmaßes bei Bedarf direkt eine Steuerung und/oder Regelung einer Prozessgröße des Lichtbogenofens erfolgen. Alternativ kann auch eine manuelle Einstellung von Stellgrößen des Lichtbogenofens durch den Operator anhand des ermittelten und vorzugsweise ausgegebenen, insbesondere graphisch ausgegebenen, Stückigkeitsmaßes erfolgen.

Die Aufgabe wird ebenfalls gelöst durch ein Speichermedium mit einem darauf gespeicherten maschinenlesbaren Programmcode gemäß Anspruch 7.

Ferner wird die der Erfindung zugrundeliegende Aufgabe gelöst durch einen Lichtbogenofen mit wenigstens einer Elektrode, mit einer Elektrodenstromerfassungseinrichtung zur Erfassung eines der wenigstens einen Elektrode zugeführten Elektrodenstroms, und mit einer Signalverarbeitungseinrichtung nach Anspruch 6, wobei die Elektrodenstromerfassungseinrichtung mit der Signalverarbeitungseinrichtung wirkverbunden ist. Dadurch kann ein Lichtbogenofen bereitgestellt werden, der anhand eines ermittelten Stückigkeitsmaßes verbessert betreibbar ist.

In einer bevorzugten Ausgestaltung des erfindungsgemäßen Lichtbogenofens ist die Signalverarbeitungseinrichtung mit einer Steuer- und/oder Regeleinrichtung zur Ermittlung einer Stellgröße für eine Prozessgröße des Lichtbogenofens aus dem Stückigkeitsmaß wirkverbunden. Die Signalverarbeitungseinrichtung und die Steuer- und/oder Regeleinrichtung können baulich zusammengefasst oder getrennt voneinander ausgebildet sein. Das Zusammenwirken dieser beiden Einrichtungen erlaubt ein automatisiertes verbessertes Betreiben des Lichtbogenofens. Insbesondere kann die Positionssteuerung der Elektroden, der Energieeintrag, die Vorhersage von Chargier- und/oder Abstichzeitpunkten verbessert werden. Unter Stellgröße für eine Prozessgröße wird jede Größe verstanden, mittels welcher eine Prozessgröße mittelbar oder unmittelbar einstellbar ist.

Weitere Vorteile der Erfindung ergeben sich aus dem nachfolgenden Ausführungsbeispiel, welches anhand der nachfolgenden Zeichnungen genauer erläutert wird. Es zeigen:
- FIG 1: eine schematische Ansicht eines Lichtbogenofens
- FIG 2: eine Darstellung eines zeitabhängigen Elektrodenstromsignals für eine Elektrode des Lichtbogenofens
- FIG 3: eine Darstellung eines frequenzabhängigen Elektrodenstromsignals in einem begrenzten Zeitfenster,
- FIG 4: einen zeitlichen Verlauf des Stückigkeitsmaßes für eine Elektrode des Lichtbogenofens,
- FIG 5: ein Flussdiagramm für einen beispielhaften Ablauf des Verfahrens.

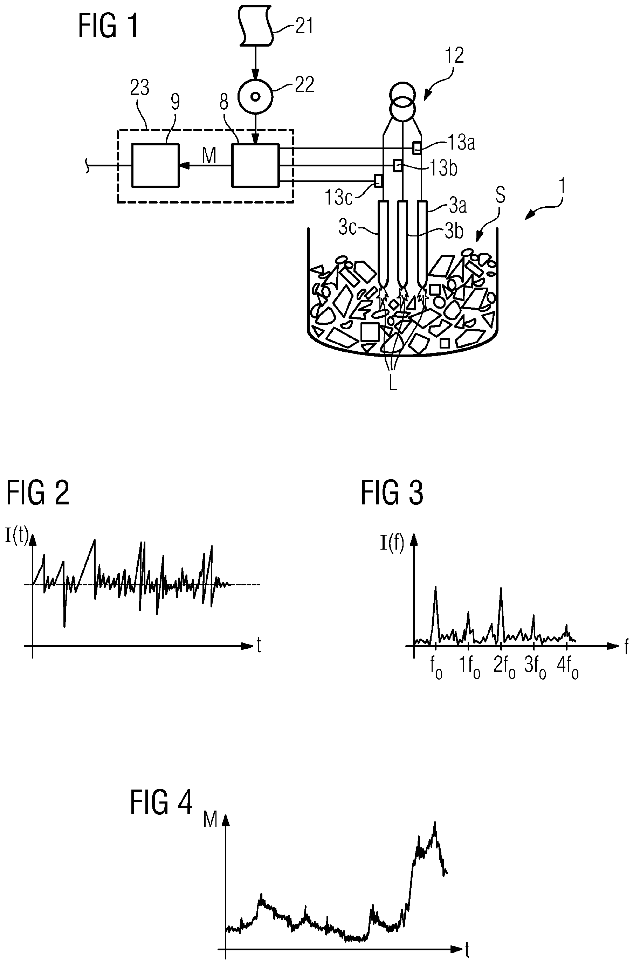

FIG 1 zeigt einen Elektrolichtbogenofen 1 mit mehreren Elektroden 3a, 3b, 3c, die über Stromzuführungen mit einer Stromversorgungseinrichtung 12 gekoppelt sind. Die Stromversorgungseinrichtung 12 weist vorzugsweise einen Ofentransformator auf.

Mit Hilfe von drei Elektroden 3a, 3b, 3c werden im Elektrolichtbogenofen 1 Beschickungsmaterialien, wie beispielsweise Stahl- und/oder Eisenschrott und/oder direktreduziertes Eisen, ggf. mit Legierungsmitteln und/oder Zusatzstoffen, aufgeschmolzen.

Bisher ist nicht bekannt, unter welcher Elektrode 3a, 3b, 3c zu welchem Zeitpunkt welcher Schrott liegt. Der Energieeintrag durch die Elektroden 3a, 3b, 3c wird daher statisch, d.h. unabhängig vom aktuell im Wesentlichen unter der Elektrode 3a, 3b, 3c befindlichen und vom Lichtbogen L getroffenen Schrott geregelt. In der Regel wird der Elektrodenstrom, und damit die Position der jeweiligen Elektrode 3a, 3b, 3c, anhand der Impedanz derart geregelt, dass die Lichtbogenlänge des jeweiligen Lichtbogens L im Wesentlichen konstant ist.

Im gezeigten Beispiel sind an den Stromzuführungen der Elektroden 3a, 3b, 3c Elektrodenstromerfassungseinrichtungen 13a, 13b, 13c vorgesehen, mit Hilfe derer Strom und/oder Spannung bzw. die den Elektroden 3a, 3b, 3c zugeführte Energie gemessen werden können. Die Elektrodenstromerfassungseinrichtungen 13a, 13b, 13c sind mit einer Signalverarbeitungseinrichtung 8 wirkverbunden. D.h., es erfolgt eine kontaktlose oder auf Kontakt beruhende Übertragung von Signalen zwischen wenigstens einer Elektrodenstromerfassungseinrichtung 13a, 13b, 13c und der Signalverarbeitungseinrichtung 8. Die übermittelten Signale repräsentieren dabei den über die Zeit erfassten Elektrodenstrom. Die Übermittlung derartiger Signale erfolgt vorzugsweise kontinuierlich und für alle den Elektroden 3a, 3b, 3c zugeführten Elektrodenströme.

Am Beispiel der Elektrode 3a des Elektrolichtbogenofens 1 wird die Ermittlung des Stückigkeitsmaßes beispielhaft erläutert. Vorzugsweise findet die Ermittlung eines Stückigkeitsmaßes kontinuierlich während des Betriebs des Elektrolichtbogenofens und für alle Elektroden 3a, 3b und 3c statt. Der zeitlich erfasste Elektrodenstrom für eine Elektrode 3a (siehe FIG 1), erfasst mit der Elektrodenstromerfassungseinrichtung 13a (siehe FIG 1), ist in FIG 2 dargestellt. Der gemessene bzw. erfasste Elektrodenstrom wird digitalisiert, sofern die Daten noch nicht digitalisiert vorliegen. Dies geschieht mittels einer ausreichend hohen Samplingrate, bspw. von 12000 Samples pro Sekunde. Die Höhe der Samplingrate ist abhängig von den auftretenden zeitlichen Elektrodenstromänderungen: dI(t)/dt. Hierbei ist I(t) das zeitlich veränderliche, dem Elektrodenstrom zugeordnete Elektrodenstromsignal und t die Zeit. Je schneller sich der Elektrodenstrom über die Zeit ändert, desto höher ist in der Regel die Samplingrate zu wählen, um die Änderungen des Elektrodenstroms mit entsprechender Genauigkeit zu erfassen. Ggf. kann die Samplingrate abhängig von zu erwartenden Elektrodenstromänderungen eingestellt werden.

Bevor die Signalverarbeitungseinrichtung 8 zur Auswertung des Verfahrens herangezogen wird, wird vorzugsweise einmalig das Verfahren in Form eines maschinenlesbaren Programmcodes 21 mittels eines Speichermediums 22, etwa einer Compact Disc, zugeführt und auf der speicherprogrammierbaren Signalverarbeitungseinrichtung 8 hinterlegt. Damit ist die Signalverarbeitungseinrichtung 8 vorbereitet zur Durchführung eines Verfahrens zur Ermittlung eines Stückigkeitsmaßes von Feststoff in einem Elektrolichtbogenofen.

Die mittels der Elektrodenstromerfassungseinrichtung 13a erfassten Elektrodenstromsignale I(t) werden der vorbereiteten Signalverarbeitungseinrichtung 8 zugeführt. In der Signalverarbeitungseinrichtung 8 wird eine Transformation des Elektrodenstromsignals I(t) aus dem Zeitraum in den Frequenzraum vorgenommen, so dass ein nach Frequenzanteilen aufgeteilter Elektrodenstrom I(f) erhalten wird, wobei f eine Frequenz ist. Gleichbedeutend zu I(f) kann I(ω) ermittelt werden, wobei ω=2πf ist. Die Transformation des Elektrodenstromsignals vom Zeitraum in den Frequenzraum geschieht vorzugsweise mittels Fouriertransformation. Jedoch sind ggf. auch anderen Transformationsmethoden geeignet, um ein Signal aus einem Zeitraum in einen Frequenzraum zu überführen. Diese stehen dem Fachmann ebenfalls zur Verfügung.

Aus dem Frequenzspektrum des transformierten Elektrodenstromsignals wird nun ein auszuwertender Frequenzbereich festgelegt. Vorzugsweise ist der Frequenzbereich im Wesentlichen genau die Betriebsfrequenz der Elektrode oder umfasst einen Frequenzbereich der im Wesentlichen genau nicht die Betriebsfrequenz der Elektrode umfasst.

FIG 3 zeigt einen Ausschnitt des in den Frequenzraum überführten Elektrodenstromssignals des in FIG 2 ausschnittsweise dargestellten Elektrodenstromsignals der Elektrode 3a (siehe FIG 1). Man erkennt, dass die höchsten Signalbeiträge für den Elektrodenstrom bei der Grundfrequenz fₒ des Elektrodenstroms und deren Vielfachen n mal f mit n = 2,3,4, ... liegen. Dies gilt in der Regel jedoch nur im zeitlichen Mittel. Die Grundfrequenz fₒ ist in der Regel die Netzfrequenz des Netzes, mit welchem die Elektroden des Elektrolichtbogenofens beaufschlagt werden. Bspw. sind dies in Europa in der Regel 50Hz, bspw. im nordamerikanischen Raum 60 Hz. Allgemein ist die Grundfrequenz fₒ die Betriebsfrequenz der Elektrode und damit halb so groß wie die Lichtbogenzündungsfrequenz.

Zusätzlich wird der Effektivwert des der Elektrode zugeführten Stroms ermittelt. Der Effektivwert ist in den Figuren nicht dargestellt. Dieser ist jedoch ebenfalls wie das Elektrodenstromsignal I(t) zeitlich variabel.

Als Stückigkeitsmaß für den im Lichtbogenofen 1 vorliegenden Feststoff wird ein Quotient bspw. aus der Summe der Stromanteile derjenigen Frequenzen, welche ein Vielfaches der Grundfrequenz, d.h. 2fₒ, 3fₒ, 4f₀ usw. sind und dem Effektivwertmaß, etwa dem Effektivwert des Elektrodenstroms, gebildet. Vorzugsweise werden nur diejenigen Stromanteile von Frequenzen aufsummiert, deren Stromanteil einen Schwellwert nicht unterschreiten bzw. deren Beitrag nicht vernachlässigbar gering ist. Der Quotient gibt somit in guter Näherung den prozentualen Oberschwingungsstromanteil des Elektrodenstromes wieder. Dieser ist als Stückigkeitsmaß geeignet, da dieser Aufschluss über das Brennverhalten des Lichtbogens gibt und dieses von der Stückigkeit des Feststoffs am Lichtbogenfußpunkt abhängt. Alternativ kann als Stückigkeitsmaß der Grundschwingungsstromanteil verwendet werden. Beide Anteile sind gleichermaßen geeignet, als Stückigkeitsmaß verwendet zu werden. Die Ermittlung des Grundschwingungsstromanteils als Stückigkeitsmaß ist in der Regel vorzuziehen, da dieser einfacher zu ermitteln ist. Durch entsprechende Normierung kann auch der Oberschwingungsstromanteil indirekt als eins minus Grundschwingungsstromanteil ermittelt werden, wobei die Summe aller Elektrodenstromanteile auf eins normiert ist.

FIG 3 stellt ein Stückigkeitsmaß als ein dem prozentualen Oberschwingungsstromanteil des Elektrodenstroms proportionales Signal dar. Ein relativer Anstieg des Stückigkeitsmaßes gibt an, dass ein Aufschmelzen von Feststoff durch den brennenden Lichtbogens erschwert ist. D.h. dass der Feststoff unter der Elektrode massiver ist als zuvor und bei gleichem Energieeintrag eine längere Aufschmelzdauer benötigt. Bspw. zeigt das in FIG 3 dargestellte Stückigkeitsmaß für spätere Zeiten einen signifikanten Anstieg. Dies deutet daraufhin, dass nun unter der betreffenden Elektrode ein massives, größeres Schrottteil zum Liegen gekommen ist, auf dem der Lichtbogen nun brennt.

Aufgrund dieses Anstiegs des Stückigkeitsmaßes kann nun vorgesehen werden, dass mittels einer Steuer- und/oder Regeleinrichtung 9 eine Prozessgröße des Lichtbogenofens, etwa die Impedanz der Elektrode 3a derart geregelt wird, dass mittels der Elektrode 3a mehr Energie in den Lichtbogenofen eingetragen wird, so dass der Schwerschrott schneller aufgeschmolzen werden kann.

Es kommt somit zu einem gleichmäßigeren Einschmelzen des festen Schmelzguts im Lichtbogenofen. Der Betrieb des Elektrolichtbogenofens wird verbessert.

Insbesondere kann der zeitliche Verlauf des Stückigkeitsmaßes herangezogen werden, um Chargierzeitpunkte und Abstichzeitpunkte verbessert festzulegen. Wird bspw. über eine längere Dauer kein signifikanter Anstieg des Stückigkeitsmaßes beobachtet, so deutet dies darauf hin, dass das Schmelzgut nun hauptsächlich in flüssiger Form vorliegt. Es kann also weiterer Schrott in den Lichtbogenofen chargiert werden oder ein Abstich erfolgen. Durch die verbesserte Bestimmung von Chargier- und/oder Abstichzeitpunkten wird der Durchsatz des Elektrolichtbogenofens erhöht, was zu einer Verbesserung der Wirtschaftlichkeit, insbesondere auch zu Energieeinsparungen, führt.

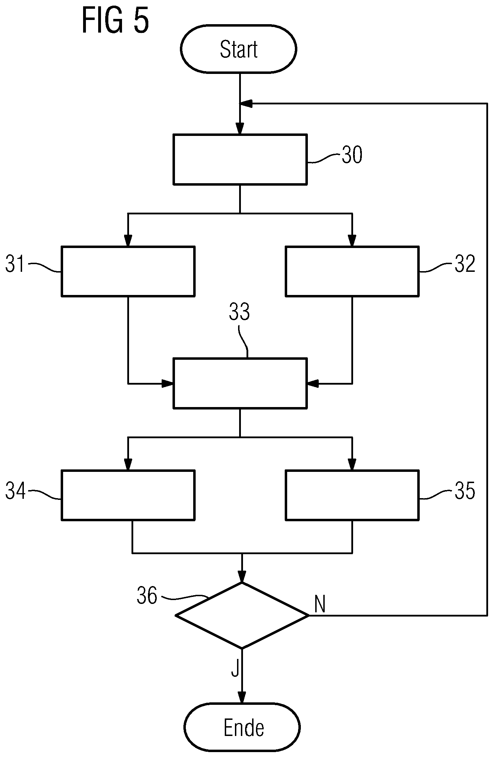

FIG 5 zeigt ein Flussdiagramm, welches einen beispielhaften Ablauf des Verfahrens darstellt. Es wird hierbei davon ausgegangen, dass der Lichtbogenofen in Betrieb ist und ein Lichtbogen zwischen Elektrode und Feststoff zum Einschmelzen des Feststoffs vorgesehen und ausgebildet ist.

Zunächst wird in einem Verfahrensschritt 30 der Elektrodenstrom für jede Elektrode des Lichtbogenofens erfasst. Aus dem erfassten Elektrodenstrom wird dann in einem Verfahrensschritt 31 ein Effektivwertmaß berechnet, bspw. in Form des Elektrodenstromeffektivwertes. Zeitlich parallel dazu wird in einem Verfahrensschritt 32 aus dem erfassten Elektrodenstrom ein frequenzaufgelöstes Elektrodenstromsignal ermittelt und aus diesem Stromanteile für einen zur Bestimmung des Stückigkeitsmaßes signifikanten Frequenzbereich ausgewählt. Anschließend wird aus den als signifikant erachteten Stromanteilen und dem Effektivwertmaß ein Quotient gebildet, welcher als Maß für die Stückigkeit des vom Lichtbogen getroffenen Feststoffs herangezogen wird. Dieses Maß wird vorzugsweise einerseits, in einem Verfahrensschritt 34, dem Bedienpersonal des Lichtbogenofens graphisch zur Anzeige gebracht. Andererseits werden in einem parallel ablaufenden Verfahrensschritt 35 aus dem Stückigkeitsmaß Stellgrößen für den Lichtbogenofen berechnet, um in den Schmelzprozess vorteilhaft einzugreifen. Anschließend wird in einem Verfahrensschritt 36 geprüft, ob das Verfahren beendet werden soll. Ist dies nicht der Fall, da bspw. der Schmelzvorgang noch nicht abgeschlossen ist, so wird das Verfahren so lange durchgeführt, bis das Verfahren beendet werden soll.

Die Ausgabe von Informationen zum Stückigkeitsmaß an das Bedienpersonal sowie die Steuerung und/oder Regelung des Lichtbogenofens anhand des Stückigkeitsmaßes sind optionale Bestandteile des Verfahrens.

## Patentansprüche

1. Verfahren zur Ermittlung eines Stückigkeitsmaßes (M) für Feststoff (S), insbesondere Schrott, in einem Lichtbogenofen (1), wobei ein einer Elektrode (3a, 3b, 3c) zur Ausbildung eines Lichtbogens (L) zwischen der Elektrode (3a, 3b, 3c) und dem Feststoff (S) zugeführter Elektrodenstrom erfasst (30) wird, wobei die Elektrode (3a, 3b, 3c) mit einer Betriebsfrequenz betrieben wird, wobei aus dem erfassten Elektrodenstrom (I(t)) ein Effektivwertmaß des erfassten Elektrodenstroms (I(t)) ermittelt (31) wird, wobei aus dem erfassten Elektrodenstrom (I(t)) ein einem Frequenzbereich, wobei der Frequenzbereich im Wesentlichen auf die Betriebsfrequenz oder ein Vielfaches der Betriebsfrequenz der Elektrode (3a, 3b, 3c) beschränkt ist, des erfassten Elektrodenstroms (I(t)) zugeordneter Stromanteil ermittelt (32) wird, wobei als Stückigkeitsmaß (M) ein Quotient aus Stromanteil und Effektivwertmaß gebildet (33) wird.

2. Verfahren nach Anspruch 1,
**dadurch gekennzeichnet, dass** der dem Frequenzbereich des erfassten Elektrodenstroms (I(t)) zugeordnete Stromanteil mittels Fouriertransformation des erfassten Elektrodenstroms (I(t)) ermittelt (32) wird.

3. Verfahren nach einem der Ansprüche 1 bis 2,
**dadurch gekennzeichnet, dass** eine Prozessgröße des Lichtbogenofens (1) mittels des ermittelten Stückigkeitsmaßes (M) gesteuert und/oder geregelt (35) wird.

4. Signalverarbeitungseinrichtung (8) für einen Lichtbogenofen (1), mit einem maschinenlesbaren Programmcode (21), welcher Steuerbefehle aufweist, die die Signalverarbeitungseinrichtung (8) zur Durchführung eines Verfahrens nach einem der Ansprüche 1 bis 3 veranlassen.

5. Maschinenlesbarer Programmcode (21) für eine Signalverarbeitungseinrichtung (8) für einen Lichtbogenofen (1), wobei der Programmcode (21) Steuerbefehle aufweist, die die Signalverarbeitungseinrichtung (8) zur Durchführung des Verfahrens nach einem der Ansprüche 1 bis 3 veranlassen.

6. Speichermedium (22) mit einem darauf gespeicherten maschinenlesbaren Programmcode (21) gemäß Anspruch 5.

7. Lichtbogenofen mit wenigstens einer Elektrode (3a, 3b, 3c), mit einer Elektrodenstromerfassungseinrichtung (13a, 13b, 13c) zur Erfassung eines der wenigstens einen Elektrode (3a, 3b, 3c) zugeführten Elektrodenstroms (I(t)), und mit einer Signalverarbeitungseinrichtung (8) nach Anspruch 4, wobei die Elektrodenstromerfassungseinrichtung (13a, 13b, 13c) mit der Signalverarbeitungseinrichtung (8) wirkverbunden ist.

8. Lichtbogenofen nach Anspruch 7,
**dadurch gekennzeichnet, dass** die Signalverarbeitungseinrichtung (8) mit einer Steuer- und/oder Regeleinrichtung (9) zur Ermittlung einer Stellgröße für eine Prozessgröße des Lichtbogenofens (1) aus dem Stückigkeitsmaß (M) wirkverbunden ist.

## Claims

1. Method for determining a size and shape measure (M) for solid material (S), in particular scrap metal, in an arc furnace (1), wherein an electrode current is detected (30) which is supplied to an electrode (3a, 3b, 3c) in order to form an arc (L) between the electrode (3a, 3b, 3c) and the solid material (S), wherein the electrode (3a, 3b, 3c) is operated at an operating frequency, wherein a root mean square value measure of the detected electrode current (I(t)) is determined (31) from the detected electrode current (I(t)), wherein a current component which is associated with a frequency range wherein the frequency range is restricted essentially to the operating frequency or a multiple of the operating frequency of the electrode (3a, 3b, 3c), of the detected electrode current (I(t)) is determined (32) from the detected electrode current (I(t)), and wherein a quotient of the current component and root mean square value measure is formed (33) as the size and shape measure (M).

2. Method according to Claim 1,
**characterized in that**
the current component which is associated with the frequency range of the detected electrode current (I(t)) is determined (32) by Fourier transformation of the detected electrode current (I(t)).

3. Method according to one of Claims 1 to 2,
**characterized in that**
a process variable of the arc furnace (1) is controlled and/or regulated (35) by the determined shape and size measure (M).

4. Signal processing device (8) for an arc furnace (1), having a machine-legible program code (21) which has control commands which cause the signal processing device (8) to carry out a method according to one of Claims 1 to 3.

5. Machine-legible program code (21) for a signal processing device (8) for an arc furnace (1), wherein the program code (21) has control commands which cause the signal processing device (8) to carry out the method according to one of Claims 1 to 3.

6. Memory medium (22) having a machine-legible program code (21) stored in it according to Claim 5.

7. Arc furnace having at least one electrode (3a, 3b, 3c), having an electrode current detection device (13a, 13b, 13c) for detecting an electrode current (I(t)) which is supplied to the at least one electrode (3a, 3b, 3c), and having a signal processing device (8) according to Claim 4, wherein the electrode current detection device (13a, 13b, 13c) is operatively connected to the signal processing device (8).

8. Arc furnace according to Claim 7,
**characterized in that**
the signal processing device (8) is operatively connected to a control and/or regulating device (9) for determining a manipulated variable for a process variable of the arc furnace (1) from the size and shape measure (M).

## Revendications

1. Procédé destiné à la détermination d'une grandeur indiquant la présence de morceaux (M) pour une matière solide (S), en particulier de la ferraille, dans un four à arc électrique (1), dans lequel un courant d'électrode conduit à une électrode (3a, 3b, 3c) pour la constitution d'un arc électrique (L) entre l'électrode (3a, 3b, 3c) et la matière solide (S) est détecté (30), dans lequel l'électrode (3a, 3b, 3c) est actionnée avec une fréquence d'actionnement, dans lequel à partir du courant d'électrode détecté (I(t)) est déterminée une grandeur de valeur effective du courant d'électrode détecté (I(t)), dans lequel à partir du courant d'électrode détecté (I(t)) est déterminée (32) une part de courant associée à une plage de fréquences, dans lequel la plage de fréquences est limitée pour l'essentiel à la fréquence d'actionnement ou à un multiple de la fréquence d'actionnement de l'électrode (3a, 3b, 3c), du courant d'électrode détecté (I(t)), dans lequel en tant que grandeur indiquant la présence de morceaux (M) un quotient est formé (33) à partir de la part de courant et de la grandeur de valeur effective.

2. Procédé selon la revendication 1,
**caractérisé en ce que** la part de courant associée à la plage de fréquences du courant d'électrode détecté (I(t)) est déterminée au moyen d'une transformée de Fourier du courant d'électrode détecté (I(t)).

3. Procédé selon l'une des revendications 1 à 2,
**caractérisé en ce qu'**une variable de processus du four à arc électrique (1) est commandée et/ou régulée (35) au moyen de la grandeur indiquant la présence de morceaux (M) déterminée.

4. Dispositif de traitement de signaux (8) pour un four à arc électrique (1), avec un code de programme lisible par une machine (21), qui présente des instructions de commande qui amènent le dispositif de traitement de signaux (8) à exécuter un procédé selon l'une des revendications 1 à 3.

5. Code de programme lisible par une machine (21) pour un dispositif de traitement de signaux (8) pour un four à arc électrique (1), dans lequel le code de programme (21) présente des instructions de commande qui amènent le dispositif de traitement de signaux (8) à exécuter le procédé selon l'une des revendications 1 à 3.

6. Support d'enregistrement (22) avec un code de programme lisible par une machine (21) enregistré dans celui-ci selon la revendication 5.

7. Four à arc électrique avec au moins une électrode (3a, 3b, 3c), avec un dispositif de détection de courant d'électrode (13a, 13b, 13c) pour la détection d'un courant d'électrode (I(t)) conduit à l'au moins une électrode (3a, 3b, 3c), et avec un dispositif de traitement de signaux (8) selon la revendication 4, dans lequel le dispositif de détection de courant d'électrode (13a, 13b, 13c) est mis en liaison active avec le dispositif de traitement de signaux (8).

8. Four à arc électrique selon la revendication 7,
**caractérisé en ce que** le dispositif de traitement de signaux (8) est mis en liaison active avec un dispositif de commande et/ou de régulation (9) pour la détermination d'une variable de réglage pour une variable de processus du four à arc électrique (1) à partir de la grandeur indiquant la présence de morceaux (M).
